# EUROPÄISCHE PATENTSCHRIFT

(11) **EP 1 522 183 B1**
(45) Veröffentlichungstag und Bekanntmachung des Hinweises auf die Patenterteilung: **21.12.2005**
(21) Anmeldenummer: 03763634.7
(22) Anmeldetag: 11.06.2003
(51) Int. Cl.: H04L 29/12, H04L 29/06

(54) **Verfahren zur Adressumsetzung in Paketnetzen und Steuerelement für Kommunikationsnetzwerke**
Method for converting addresses in packet networks and control element for communications networks
Procédé de conversion d'adresses dans de réseaux de commutation par paquets et element de commande pour réseaux de communication

(30) Priorität: 16.07.2002 EP 02015865
(43) Veröffentlichungstag der Anmeldung: 13.04.2005
(73) Patentinhaber: SIEMENS AKTIENGESELLSCHAFT, 80333 München (DE)
(72) Erfinder: RUCKSTUHL, Hanspeter, 82515 Wolfratshausen (DE)
(86) Internationale Anmeldenummer: PCT/EP2003/006135
(87) Internationale Veröffentlichungsnummer: WO 2004/008717

(56) Entgegenhaltungen:
- WO-A-02/23822

## Beschreibung

Moderne Paketnetzprotokolle, z.B. das Internetprotokoll IP, verwenden für die Adressierung der Endgeräte und das Routing der Datenpakete zwischen Ursprung und Ziel dieselben Adressen, für das Internetprotokoll gebildet aus IP Adresse und UDP/TCP Portnummer (UDP = User Datagram Protocol, TCP = Transmission Control Protocol). Dies erleichtert die globale Kommunikation und Erreichbarkeit, verbraucht aber eine sehr große Anzahl globaler, d.h. weltweit eindeutiger Adressen.

In der Praxis werden deshalb oft Verfahren zur Reduktion der Anzahl der für die weltweite Kommunikation benötigten globalen Adressen eingesetzt. Es werden lokale Netze mit privaten, nur lokal eindeutigen und nur lokal gültigen Adressen gebildet. Für IP Netze, die auf IP Version 4 (IPv4) basieren, werden im IETF RFC 1918 Adreßbereiche für private Netze definiert. Ein weiteres IETF RFC ist in Vorbereitung und derzeit als Draft unter dem Titel "Special-Use IPv4 Addresses" verfügbar. Der Dateiname der aktuellen Draft Version 3 lautet "draft-iana-special-ipv4-03.txt". Diese Draft Version 3 ist im Internet unter anderem bei der IETF erhältlich.

Die netzübergreifende Kommunikation verlangt bei Einsatz privater bzw. lokaler Netze die Umsetzung der lokalen Adressen in andere lokale bzw. globale Adressen. Dieses Verfahren wird im folgenden Adreßumsetzung genannt. In der Praxis wird Adreßumsetzung auch dazu eingesetzt, das eigene Netz gegen unautorisierte Zugriffe von außen zu sichern.

Adreßumsetzung kommt in den heute weit verbreiteten IP Netzen häufig zum Einsatz. Es wird in diesem speziellen Umfeld, d.h. bei Zusammenschaltung von IP Netzen, als Network Address Translation NAT oder Network Port Address Translation NPAT bezeichnet und ist im IETF RFC 1631 definiert. NAT bzw. NPAT hat sich für die Datenkommunikation zwischen Endgeräten und Servern bewährt.

Moderne Paketnetze sind sowohl für Echtzeitkommunikation, z.B. Sprache, als auch für die Übertragung von Daten ohne Echtzeitanforderungen geeignet. Echtzeitkommunikation in Paketnetzen funktioniert in der Regel nach dem Prinzip der Separierung von Verbindungs- und Nutzkanalsteuerung. Es werden also, anders als im herkömmlichen Telefonnetzwerk, zumindest auf logischer Ebene unterschiedliche Netzelemente zur Verbindungssteuerung und zur Nutzkanalsteuerung verwendet. Die Verbindungssteuerung übernehmen spezialisierte Kontrollelemente, welche mit Endgeräten, Media Gateways, Access Konzentratoren, Multimedia Servern und anderen Netzelementen und natürlich auch miteinander kommunizieren.

Für den Anwendungsfall Sprach- und Multimediakommunikation werden diese spezialisierten Kontrollelemente oft auch SoftSwitches genannt. SoftSwitches unterstützen, je nach Umfeld und Anwendungsfall, unterschiedlichste Prozeduren und Protokolle zur Verbindungsteuerung, z.B. Session Initiation Protocol SIP, Bearer Independent Call Control BICC, ITU-T H.323, ITU-T H.248 oder Media Gateway Control Protocol MGCP.

All diese Verfahren zur Steuerung von Echtzeitkommunikation haben gemein, daß die Adressen der beteiligten Kommunikationspartner über das Verbindungssteuerungsprotokoll ausgetauscht werden. Kommt nun Adreßumsetzung zum Einsatz, sind die mittels Verbindungssteuerungsprotokoll signalisierten Adressen der beteiligten Endgeräte und die tatsächlich zur Adressierung der Nutzkanaldaten benötigten Adressen unterschiedlich. Das bedeutet, daß die Echtzeitkommunikation bei Einsatz von Adreßumsetzung nicht funktioniert.

Es ist denkbar, das sich daraus ergebende Problem durch den Einsatz statischer Adreßumsetzung im verbindungssteuernden Netzelement, z.B. SoftSwitch, und im nutzkanalsteuernden Element, z.B. NAT/NPAT Router, zu umgehen. Diese Vorgehensweise erfordert jedoch einen sehr hohen administrativen Aufwand und ist daher nicht praktikabel einsetzbar. Erstens ist sicherzustellen, daß die Adreßumsetzungstabellen im verbindungssteuernden Netzelement und im nutzkanalsteuernden Netzelement konsistent gehalten werden. Zweitens sind die Adreßumsetzungstabellen bei jeder Konfigurationsänderung, d.h. beispielsweise auch beim Hinzufügen eines einzigen VoIP Clients, anzupassen.

Veröffentlichung WO 02/23822 offenbart ein Verfahren zur Adreßumsetzung. Dieses Verfahren zeichnet sich dadurch aus, daß ein verbesserter NAT Router eingesetzt wird, der einen besonderen Adreßmanager aufweist. Dieser Adreßmanager legt eine Umsetzungsregel fest und weist eine Steuerverbindung zum Liefern der Umsetzungsbeziehung an eine anfordernde Applikation auf. Nachteilig an einem solchen verbesserten NAT Router ist, daß vorhandene, installierte NAT Router durch solche verbesserten Router ersetzt oder zumindest um Schnittstellen zur Ermittlung und Einstellung der Adreßumsetzung ergänzt werden müssen.

Es ist eine Aufgabe der vorliegenden Erfindung, ein Verfahren und ein Steuer element anzugeben, welches die Echtzeitkommunikation bei Einsatz von Adreßumsetzung ermöglicht und mit herkömmlichen Adreßumsetzern funktioniert, für IP Netze also mit herkömmlichen NAT/NPAT Routern, welche über keinerlei Schnittstellen zur Ermittlung und Einstellung der Adreßumsetzung verfügen. Es ist ferner eine Aufgabe der vorliegenden Erfindung, ein Verfahren und ein Netzelement anzugeben, welches Echtzeitkommunikation in IP Netzen bei Einsatz von NAT bzw. NPAT ermöglicht.

Diese Aufgabe wird durch ein Verfahren zur Adreßumsetzung gemäß der Merkmale des Patentanspruchs 1 und durch ein Steuerelement für Kommunikationsnetzwerke gemäß der Merkmale des Patentanspruchs 8 gelöst.

Bevorzugte Ausführungsformen sind Gegenstand der abhängigen Ansprüche.

Gemäß der vorliegenden Erfindung wird ein Verfahren zur Adreßumsetzung für eine über eine Signalisierungsverbindung SV gesteuerte Nutzdatenverbindung NV zwischen einem ersten Kommunikationsnetz N1, welches nur innerhalb des ersten Netzes N1 gültige Adressen aufweist, und einem zweiten Kommunikationsnetz N2 vorgesehen, wobei eine Verbindungsanforderung von einem im ersten Netz N1 angeordneten ersten Netzelement NE1, dem eine erste Adresse A1 zugeordnet ist, ausgeht, wobei die Verbindungsanforderung eine Kommunikation mit einem über das zweite Netz N2 erreichbaren zweiten Netzelement NE2, dem eine zweite Adresse A2 zugeordnet ist, zum Ziel hat und die Verbindungsanforderung zunächst zu einem Steuerelement S des ersten Netzes N1 geleitet wird. Das Verfahren zeichnet sich dadurch aus,
- daß das Steuerelement S an einem Übergang zwischen dem ersten und dem zweiten Netz angeordnet ist und sowohl eine dritte Adresse A3 des ersten Netzes N1 als auch eine vierte Adresse A4 des zweiten Netzes N2 aufweist,
- daß durch das Steuerelement S eine mit der ersten Adresse A1 als Ursprungsadresse und der vierten Adresse A4 als Zieladresse versehene Nachricht an ein nutzdatenvermittelndes viertes Netzelement AU über das erste Netz N1 gesendet wird, und
- daß durch das Steuerelement S diese Nachricht nach im vierten Netzelement AU erfolgter Adreßumsetzung mit umgesetzter Ursprungsadresse A1' über das zweite Netz N2 empfangen und die umgesetzte Ursprungsadresse A1' ausgewertet wird, um so eine für die über das vierte Netzelement AU geleitete Nutzdatenverbindung NV des ersten Netzelementes NE1 geltende Adreßumsetzungsbeziehung A1 <-> A1' zwischen dem ersten und dem zweiten Netz zu ermitteln. Gemäß der vorliegenden Erfindung wird ferner ein Steuerelement S für Kommunikationsnetzwerke N1, N2 vorgesehen mit Mitteln zum Empfang einer Verbindungsanforderung von einem in einem ersten Netz N1 angeordneten ersten Netzelement NE1, das eine erste Adresse A1 aufweist, wobei die Verbindungsanforderung eine Kommunikation mit einem über ein zweites Netz N2 erreichbaren zweiten Netzelement NE2, dem eine zweite Adresse A2 zugeordnet ist, zum Ziel hat, wobei das erste Netz N1 nur innerhalb des ersten Netzes N1 gültige Adressen aufweist. Das Steuerelement S zeichnet sich dadurch aus, daß es an einem Übergang zwischen dem ersten und dem zweiten Netz angeordnet ist und folgendes aufweist:

- eine dritte Adresse A3 des ersten Netzes N1 und eine vierte Adresse A4 des zweiten Netzes N2,
- Mittel zum Senden einer mit der ersten Adresse A1 als Ursprungsadresse und der vierten Adresse A4 als Zieladresse versehenen Nachricht an ein nutzdatenvermittelndes viertes Netzelement AU über das erste Netz N1, und
- Mittel zum Empfangen der Nachricht über das zweite Netz N2 sowie Mittel zum Auswerten einer umgesetzten Ursprungsadresse A1' der Nachricht zum Ermitteln einer für eine über das vierte Netzelement AU geleitete Nutzdatenverbindung NV des ersten Netzelementes NE1 geltenden Adreßumsetzungsbeziehung A1 <-> A1' zwischen dem ersten und dem zweiten Netz.

Ein wichtiger Vorteil der Erfindung besteht darin, daß zuverlässig die bei Netzübergängen infolge Adreßumsetzung neu zu verwendenden Absenderadressen und Zieladressen einstellbar bzw. ermittelbar sind.

Die Erfindung eignet sich besonders gut für IP Netze und die Verwendung im Zusammenhang mit Echtzeitkommunikation in IP Netzen mit getrennter Verbindungs- und Nutzkanalsteuerung.

Die Erfindung weist weiterhin folgende Vorteile auf:
- Es werden keine besonderen Einrichtungen oder Schnittstellen voraussetzt. Zur Ermittlung und Einstellung der Adreßumsetzung können beliebige Nachrichten bzw. Datenpakete verwendet werden.
- Die Erfindung kann sowohl mit statischer als auch mit dynamischer Adreßumsetzung oder der Kombination beider Methoden verwendet werden.
- Die Erfindung ist in heutigen IP Netzen, welche NAT/NPAT verwenden, einsetzbar, ohne daß zusätzliche Netzelemente eingeführt werden müssen.
- Die Erfindung funktioniert mit herkömmlichen Adreßumsetzern, für IP Netze also mit herkömmlichen NAT/NPAT Routern, welche über keinerlei Schnittstellen zur Ermittlung und Einstellung der Adreßumsetzung verfügen.
- Bei Einsatz statischer Adreßumsetzung verringert sich der administrative Aufwand drastisch, da die entsprechenden Daten nur noch im nutzdatenvermittelnden Netzelement verwaltet werden müssen, wobei durch die Erfindung die im Adreßumsetzer hinterlegte statische Konfiguration durch ein Steuerelement ermittelt werden kann.

Im folgenden wird die Erfindung als Ausführungsbeispiel anhand von 2 Figuren näher erläutert.

Figur 1 zeigt eine Verbindung zweier Netzwerke mittels eines Adreßumsetzers und eines Steuerelementes.
Figur 2 zeigt eine typische Netzwerkkonstellation bei einer Echtzeitkommunikationsverbindung zwischen zwei Endgeräten über ein Paketnetz mit den zugehörigen Abläufen zur Adreßsignalisierung.

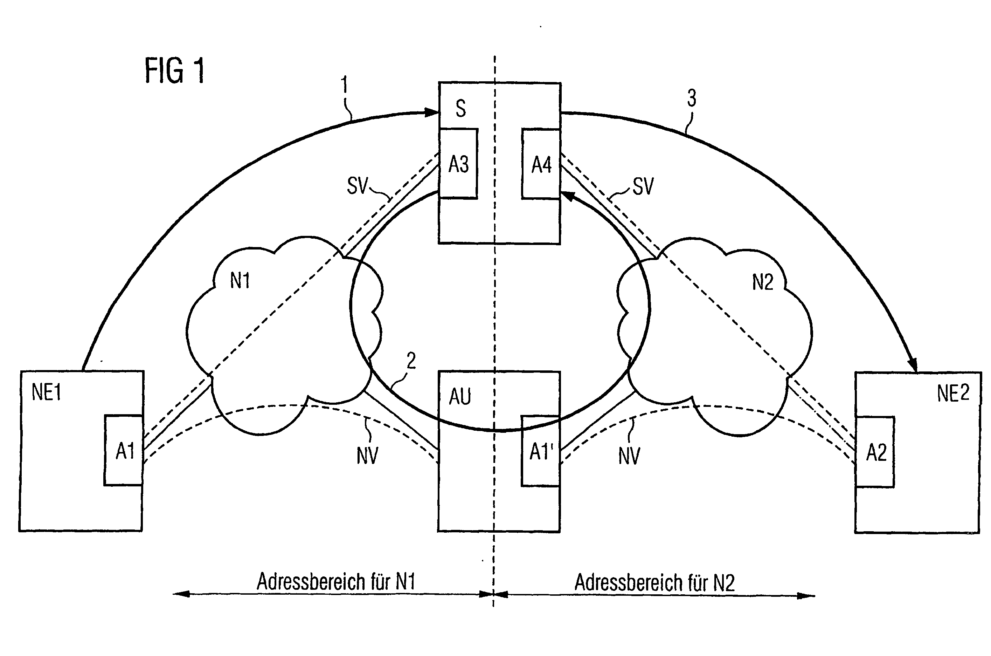

In Figur 1 sind ein erstes Netzelement NE1 und ein zweites Netzelement NE2 dargestellt. Bei diesen Netzelementen kann es sich beispielsweise um Endgeräte, Media Gateways, Access Konzentratoren, Multimedia Servern oder beliebige andere Netzelemente eines IP Netzes handeln. Im Fall von Endgeräten kann es sich z.B. um ein Voice-over-IP VoIP Endgerät oder um ein Endgerät für IP basierte Videokonferenzen handeln.

Das erste Netzelement NE1 weist eine erste Netzadresse A1 auf, und das zweite Netzelement NE2 weist eine zweite Netzadresse A2 auf. Für das bevorzugte Ausführungsbeispiel handelt es sich bei den Adressen A1 und A2 um IP Adressen. Um die Darstellung zu vereinfachen, wurde für die Netzelemente NE1 und NE2 jeweils nur eine Adresse dargestellt. Es ist jedoch möglich und in vielen Fällen erforderlich, daß die Netzelemente NE1 und NE2 mehrere Adressen aufweisen. Dies wird in IP Netzen durch die Portnummern der Protokolle UDP und TCP gewährleistet. Eine vollständige TCP/UDP Adresse besteht daher immer aus IP Adresse und Portnummer.

Das erste Netzelement NE1 ist mit einem ersten Kommunikationsnetz N1 (im folgenden kurz: erstes Netz N1) verbunden und damit Element bzw. Bestandteil des ersten Netzes N1. Mit dem ersten Netz N1 ebenfalls verbunden ist ein Steuerelement S, welches der Verbindungssteuerung dient, und ein Adreßumsetzer AU, dessen Funktion später genauer beschrieben wird.

Das zweite Netzelement NE2 ist über ein zweites Kommunikationsnetz N2 (im folgenden kurz: zweites Netz N2) erreichbar. Ob mittelbar, d.h. über weitere, nicht dargestellte Netze, oder unmittelbar mit dem zweiten Netz N2 gekoppelt, ist für die vorliegende Erfindung von untergeordneter Bedeutung. Daher ist die Verbindung zwischen dem zweiten Netz N2 und dem zweiten Netzelement NE2 mit Strichpunktlinie dargestellt, um anzudeuten, daß diese Verbindung über weitere zwischengeschaltete Netze erfolgen kann. Wichtig für die Beschreibung der vorliegenden Erfindung ist lediglich, daß die beiden Netze N1 und N2 verschieden sind.

Dabei bedeutet "verschieden" an dieser Stelle, daß ein Element des Netzes N1 aus dem zweiten Netz N2 nicht unmittelbar, sondern nur über den Adreßumsetzer AU erreichbar ist und umgekehrt. Mögliche Gründe dafür und für IP Netze übliche Lösungen wurden eingangs bereits erläutert. Jedem der zwei Netze N1, N2 ist ein Adreßbereich oder Adreßraum zugeordnet. Dies sich ergebenden zwei Adreßbereiche werden durch entsprechende Pfeile dargestellt. Die Trennung der zwei Adreßbereiche an der Grenze der beiden Netze N1, N2 wird durch eine gestrichelte Linie dargestellt.

Weitere Bestandteile des zweiten Netzes N2 bzw. mit diesem verbunden sind das Steuerelement S und der Adreßumsetzer AU.

Der Adreßumsetzer AU dient, wie bereits angedeutet, der Umsetzung von Adressen zwischen den zwei Netzen N1 und N2. Im folgenden wird ohne Beschränkung der Allgemeinheit angenommen, daß das erste Netz N1 ein nichtöffentliches oder privates Netz ist und daß das zweite Netz N2 ein öffentliches Netz ist. Der Adreßumsetzer AU verfügt über eine Reihe bzw. einen Pool von Adressen des öffentlichen Netzes N2, die dynamisch oder statisch Elementen des nichtöffentlichen Netzes N1 zugewiesen werden können. Beispielhaft dargestellt ist eine fünfte Adresse A1', die im Adreßumsetzer der ersten Adresse A1 des ersten Netzelementes NE1 zugeordnet ist. Nachrichten aus dem öffentlichen in das nichtöffentliche Netz werden dann an die Adresse A1' des Adreßumsetzers gerichtet, der beispielsweise anhand einer Tabelle die Zuordnung A1 <-> A1' feststellt und die Nachrichten zur ersten Adresse A1 weiterleitet.

In Figur 1 ist weiterhin eine Steuerungsverbindung SV zwischen dem ersten Netzelement NE1 und dem Steuerelement S sowie zwischen dem Steuerelement S und dem zweiten Netzelement NE2 gestrichelt dargestellt. Außerdem ist eine Nutzdatenverbindung NV gestrichelt dargestellt, wobei die Nutzdatenverbindung zwischen dem ersten Netzelement NE1 und dem Adreßumsetzer AU sowie dem Adreßumsetzer AU und dem zweiten Netzelement NE2 besteht.

Das Steuerelement S weist zumindest eine dritte Adresse A3 aus dem Adreßbereich des ersten Netzes N1 und zumindest eine vierte Adresse A4 aus dem Adreßbereich des zweiten Netzes N2 auf, um bezüglich des ersten Netzes N1 eingehende oder ausgehende Verbindungen steuern zu können. Das Steuerelement S umfaßt ferner Tabellen oder andere Zuordnungsmechanismen, um für bezüglich des ersten Netzes N1 eingehende Verbindungen aus einer mit dem jeweiligen Vermittlungsprotokoll konformen Zieladresse die Netzwerkadresse des durch die Zieladresse aus dem Adreßbereich des ersten Netzes N1 adressierten Netzelementes zu ermitteln. Das Steuerelement S umfaßt außerdem Tabellen oder andere Zuordnungsmechanismen, um für bezüglich des ersten Netzes N1 ausgehende Verbindungen oder innerhalb des Netzes N1 zu vermittelnde Verbindungen aus einer mit dem jeweiligen Vermittlungsprotokoll konformen Zieladresse die Netzwerkadresse des jeweils zugehörigen Netzelementes oder die Netzwerkadresse eines weitervermittelnden Netzelementes, beispielsweise eines weiteren Steuerelementes, zu ermitteln. Weiterhin existiert ein für das Steuerelement S interner Kommunikationsweg zwischen einer ersten Schnittstelle des Steuerelementes S zum ersten Netz N1 und einer zweiten Schnittstelle des Steuerelementes S zum zweiten Netz N2.

Ein Problem ergibt sich, wenn eine Verbindung vom ersten Netzelement NE1 ausgehend initiiert wird. In einer entsprechenden Signalisierungsnachricht, die über die Signalisierungsverbindung ausgetauscht wird, wird die erste Adresse A1 des ersten Netzelementes NE1 eingetragen. Dabei repräsentiert diese erste Adresse A1 die Nutzkanaladresse, im bevorzugten Ausführungsbeispiel kann dies eine IP Adresse mit entsprechendem TCP/UDP Port sein. Das Senden der Signalisierungsnachricht ist in Figur 1 mit "1" bezeichnet. Es ist für die vorliegende Erfindung unwesentlich, ob die Signalisierungsverbindung zum Steuerelement zunächst aufgebaut werden muß oder ob diese permanent besteht.

Wird die Signalisierungsnachricht vom Steuerelement S empfangen und durch das Steuerelement S ein Ziel außerhalb des ersten Netzes N1 festgestellt, tritt also der Fall auf, daß eine außerhalb des Netzes N1 ungültige Quelladresse A1 das verbindungsanfordernde Netzelement NE1 bezeichnet. Für den weiteren Verbindungsaufbau muß anstatt der ersten Adresse A1 deren im zweiten Netz N2 gültige "Stellvertreteradresse", die fünfte Adresse A1' in die vom Steuerelement S erzeugte bzw. weitergeleitete Signalisierungsnachricht eingetragen werden. Diese Adreßumsetzungsbeziehung A1 <-> A1' ist allerdings beim Steuerelement S nicht bekannt. Für den Fall dynamischer Adreßumsetzung, bei der die "Stellvertreteradresse" A1' erst zugewiesen wird, wenn eine Verbindung über den Adreßumsetzer AU durch das erste Netzelement A1 angefordert wird, beispielsweise also beim Etablieren der Nutzdatenverbindung NV, ist die Adreßumsetzungsbeziehung zu dem Zeitpunkt, zu dem das Steuerelement S die Signalisierungsnachricht weiterleiten muß, um zunächst die Signalisierungsverbindung SV zum eigentlichen Ziel weiterzuleiten, überhaupt noch nicht bekannt.

Dieses Problem wird erfindungsgemäß durch den in Figur 1 mit "2" bezeichneten Vorgang gelöst. Dazu wird von einer ersten Schnittstelle des Steuerelementes S im ersten Netz N1, der die dritte Adresse A3 zugeordnet ist, eine Nachricht an eine zweite Schnittstelle des Steuerelementes im zweiten Netz N2, der die vierte Adresse A4 zugeordnet ist, gesendet. Diese Nachricht erhält als Absenderkennung bzw. Quellkennung jedoch nicht die dritte Adresse A3, sondern die Adresse des verbindungsanfordernden Netzelementes, hier also die erste Adresse A1. Die Nachricht kann dabei eine beliebige gültige Nachricht sein. Keine weitere Modifikation der Nachricht ist erforderlich. Der Adreßumsetzer interpretiert die empfangene Nachricht mit Quellkennung=A1 und Zielkennung=A4 als eine Nachricht vom ersten Netzelement NE1 und behandelt diese entsprechend der für Adreßumsetzer AU bekannten Mechanismen. Bei statischer Adreßumsetzung leitet der Adreßumsetzer AU die Nachricht an die zweite Schnittstelle des Steuerelementes S unter Verwendung der bisher nur im Adreßumsetzer AU bekannten Adreßumsetzungsbeziehung A1 <-> A1' weiter, indem der Adreßumsetzer AU die Nachricht mit Quellkennung=A1' und Zielkennung=A4 weiterleitet. Bei dynamischer Adreßumsetzung ermittelt der Adreßumsetzer AU gemäß wohlbekannter Verfahren eine geeignete "Stellvertreteradresse" A1' und vermerkt diese, erst ab diesem Zeitpunkt gültige, Adreßumsetzungsbeziehung A1 <-> A1' in einer Tabelle oder einem anderen Zuordnungsspeicher und leitet anschließend die Nachricht mit Quellkennung=A1' und Zielkennung=A4 weiter.

Aus der über die zweite Schnittstelle empfangenen Nachricht kann im Steuerelement S die der ersten Adresse A1 des ersten Netzelementes NE1 zugeordnete "Stellvertreteradresse", die fünfte Adresse A1', abgeleitet werden. Diese fünfte Adresse A1' ist im zweiten Netz N2 repräsentativ für das erste Netzelement NE1, d.h. innerhalb des zweiten Netzes N2 an die fünfte Adresse A1' geleitete werden vom Adreßumsetzer AU empfangen und auf die erste Adresse A1 für die Weiterleitung an das ersten Netzelement NE1 im ersten Netz N1 umgesetzt. In Figur 1 mit "3" dargestellt ist der Vorgang, mit dem die Signalisierungsnachricht in Vorwärtsrichtung, d.h. zum Ziel hin, weitergeleitet wird. In diese Signalisierungsnachricht wird durch das Steuerelement S die im zweiten Netz N2 gültige "Stellvertreteradresse" A1' für das ersten Netzelement NE1 eingetragen, wodurch es möglich wird, die Nutzdatenverbindung NV Ende zu Ende, d.h. zwischen dem ersten Netzelement NE1 und dem zweiten Netzelement NE2, zu etablieren.

In der umgekehrten Richtung, d.h. für verbindungssteuernde Nachrichten, welche das Steuerelement S aus dem zweiten Netz N2 mit einem Ziel innerhalb des ersten Netzes N1 empfängt, wird die aus dem zweiten Netz N2 empfangene Nutzkanaladresse nicht verändert, da es sich bei der signalisierten Nutzkanaladresse um eine globale Adresse, d.h. eine Adresse aus dem Adreßbereich für das zweite Netz N2, handelt.

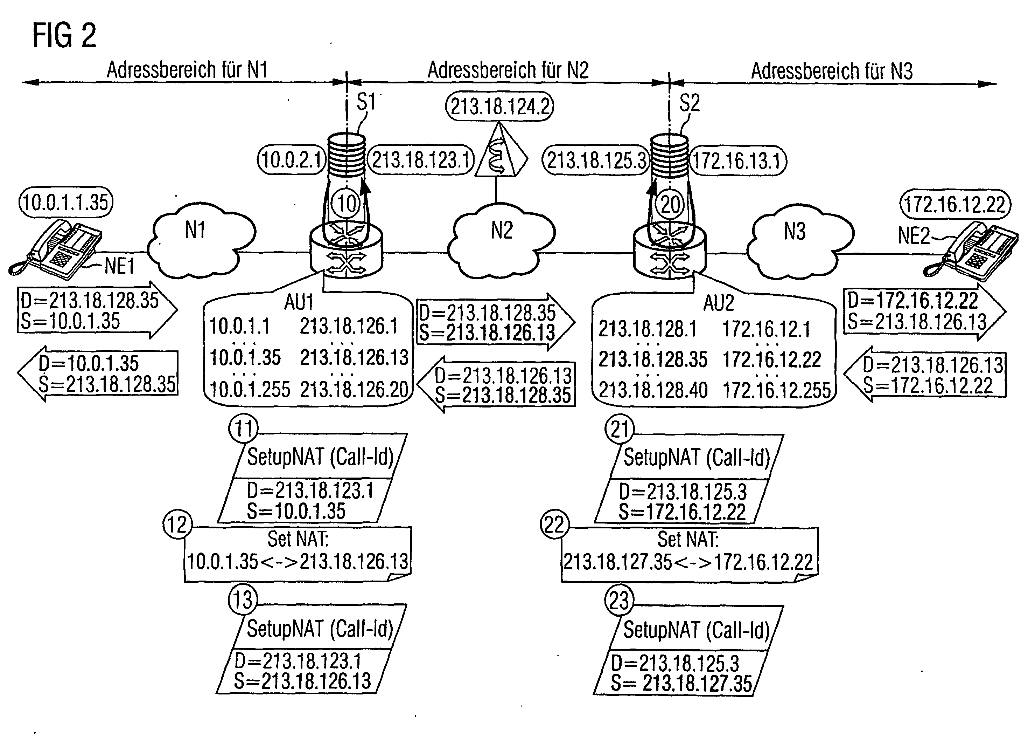

Mit Bezug auf Figur 2 wird im folgenden eine typische Netzwerksituation erläutert, bei der das zweite Netzelement NE2 Teil eines dritten Kommunikationsnetzes N3 ist. Dabei besteht eine Koppelung der Netze N1 und N2 wie in Figur 1 über einen ersten Adreßumsetzer AU1 und ein erstes Steuerelement S1. Die Netze N2 und N3 sind in ähnlicher Weise über einen zweiten Adreßumsetzer AU2 und ein zweites Steuerelement S2 gekoppelt. Die Adreßbereiche der Netze N1 und N3 seien aus dem zweiten Netz N2 nicht direkt, sondern nur mittels Adreßumsetzung in den Adreßumsetzern AU1 und AU2 erreichbar.

Für die Darstellung in Figur 2 wurden zur besseren Erläuterung des bevorzugten Ausführungsbeispiels anstelle der bisher verwendeten symbolischen Adressen A1, A2, A3, A4, A1' direkt IP Adressen verwendet. Dies bedeutet jedoch nicht, daß sich die Erfindung auf IP Adressen beschränkt. Eine Verwendung anderer Adreßformen oder Adreßformate erschließt sich dem Fachmann ohne weiteres aus Figur 2 im Zusammenhang mit den Erläuterungen zu Figur 1.

Für den Adreßbereich des ersten Netzes N1 wurde beispielhaft der IP Adreßraum 10.x.x.x gewählt, der entsprechend des in vielen Fällen verwendeten IETF RFC 1918 ein privates IP Netzwerk der Klasse A definiert. Für den Adreßbereich des dritten Netzes N3 wurde beispielhaft der IP Adreßraum 172.16.x.x gewählt, der entsprechend des in vielen Fällen verwendeten IETF RFC 1918 ein privates IP Netzwerk der Klasse B definiert. Mit dem Fortschreiten der weltweiten Standardisierung können sich diese Adreßräume oder deren Klassifizierung ändern. Wichtig für die Erläuterung des Ausführungsbeispiels ist lediglich, daß die Adressen der Netze N1 und N3 aus dem zweiten Netz N2 nicht sichtbar sind bzw. daß für das Erreichen von Zielen in den Netzen N1 und N3 eine Adreßumsetzung erforderlich ist.

Obwohl für die Erläuterung des Ausführungsbeispiels im Zusammenhang mit Figur 2 IPv4 Adressen verwendet werden und sich die Erfindung für IPv4 Netze besonders eignet, da aufgrund der erwähnten eingeschränkten Verfügbarkeit weltweit eindeutiger IPv4 Adressen private Netze gebildet werden müssen, die dann zur Kommunikation nach außen Adreßumsetzer erfordern, ist die Erfindung auch für Netze anwendbar, die auf IPv6 basieren, auch wenn durch IPv6 die Notwendigkeit der Adreßumsetzung aufgrund beschränkten Adreßraumes entfällt. Wie eingangs erwähnt, können andere Erwägungen, z.B. Sicherheitsinteressen, die Abgrenzung eines Adreßraums vom öffentlichen Adreßraum erfordern.

Folgende Tabelle faßt die für Figur 2 gewählten IP Adressen der einzelnen Komponenten zusammen. Adressen in Anführungszeichen bezeichnen dabei "Stellvertreteradressen", die sich bei dynamischer Adreßumsetzung erst im Laufe des Verbindungsaufbaus ergeben.

| Komponente | Adresse im ersten Netz N1 | Adresse im zweiten Netz N2 | Adresse im dritten Netz N3 |
|---|---|---|---|
| NE1 | 10.0.1.35 | "213.18.126.13" | - |
| NE2 | - | "213.18.128.35" | 172.16.12.22 |
| S1 | 10.0.2.1 | 213.18.123.1 | - |
| S2 | - | 213.18.125.3 | 172.16.13.1 |

Die Netzelemente NE1 und NE2, in Figur 2 beispielhaft als VoIP Endgeräte dargestellt, weisen neben den zugeordneten IP Adressen jeweils eine symbolische bzw, logische Adresse auf - nicht dargestellt. Diese logische Adresse kann im Stil einer herkömmlichen Telefonnummer aufgebaut sein. Um eine Verbindung vom ersten Netzelement NE1 zum zweiten Netzelement NE2 aufzubauen, wählt ein Nutzer dann diese Telefonnummer am ersten Netzelement NE1. Dies führt zu den im folgenden erläuterten Abläufen. Zur Vereinfachung der Darstellung in Figur 2 und der folgenden Beschreibung wurden dabei folgende Abkürzungen gewählt:
D = Destination Address, für: Zieladresse
S = Source Address, für: Quell- bzw. Absenderadresse

Eine Verbindungsanforderung wird vom ersten Netzelement NE1 zum ersten Steuerelement S1 mit der logischen Adresse des zweiten Netzelementes NE2 gesendet. Die Behandlung der Verbindungsanforderung im ersten Steuerelement S1 ist in der Technik wohlbekannt und wird hier nicht näher erläutert. Anhand der logischen Adresse des zweiten Netzelementes NE2 wird ermittelt, daß das zweite Netzelement NE2 über das zweite Netz N2 erreichbar ist. Um die Verbindungsanforderung an das zuständige zweite Steuerelement S2 weiterleiten zu können, wird durch den Vorgang 10, bestehend aus den Schritten 11, 12, 13 die das erste Netzelement NE1 repräsentierende Adresse des zweiten Netzwerkes N2 ermittelt.

Im Schritt 11 sendet das erste Steuerelement S1 eine hier mit "SetupNAT (Call-Id)" bezeichnete Nachricht an den ersten Adreßumsetzer AU1, bei dem es sich vorzugsweise um einen NAT Router handelt. Diese Nachricht wird mit D=213.18.123.1, S=10.0.1.35, d.h. der Absenderadresse des ersten Netzelementes NE1, gekennzeichnet.

Im Schritt 12 erzeugt der erste Adreßumsetzer AU1 die Adreßumsetzungsbeziehung 10.0.1.35 <-> 213.19.126.13 d.h. die globale Adresse 213.18.126.13 repräsentiert damit das erste Netzelement NE1. Diese Beziehung wird in einer entsprechenden Tabelle des ersten Adreßumsetzers AU1 vermerkt, in der auch andere Adreßumsetzungsbeziehungen gespeichert sind. Alternativ dazu steht im Fall statischer Adreßumsetzung die Adreßumsetzungsbeziehung 10.0.1.35 <-> 213.18.126.13 bereits im voraus fest.

Im Schritt 13 leitet der erste Adreßumsetzer AU1 die Nachricht "SetupNAT (Call-Id)" an D=213.18.123.1 weiter und setzt als Absenderadresse die "Stellvertreteradresse" S=213.18.126.13. Anhand einer in der Nachricht "SetupNAT (Call-Id)" enthaltenen Call-Id bzw. Verbindungskennung wird die empfangene "Stellvertreteradresse" der durch das erste Netzelement NE1 angeforderten Verbindung zugeordnet.

Über die - nicht dargestellte - Signalisierungsverbindung wird die Verbindungsanforderung anhand der logischen Adresse des zweiten Netzelementes NE2 über weitere Elemente, beispielhaft dargestellt durch ein Element mit der Adresse 213.18.124.2, zum zweiten Steuerelement S2 und von dort zum zweiten Netzelement NE2 weitergeleitet.

Die Verbindungsanforderung wird auf dem umgekehrten Signalisierungsweg bestätigt. Dazu sendet das zweite Netzelement eine Bestätigungsnachricht an das zweite Steuerelement S2. Um die Bestätigung an das zuständige erste Steuerelement S1 weiterleiten zu können, wird durch den Vorgang 20, bestehend aus den Schritten 21, 22, 23 die das zweite Netzelement repräsentierende Adresse des zweiten Netzwerkes N2 ermittelt. Gleichzeitig wird die in der Verbindungsanforderung enthaltene "Stellvertreteradresse" 213.18.126.13 des ersten Netzelementes NE1 für die zu etablierende Nutzdatenverbindung vermerkt. Da die "Stellvertreteradresse" 213.18.126.13 eine globale Adresse ist, kann zu diesem Zeitpunkt bereits eine Datenkommunikation vom zweiten Netzelement NE2 zum ersten Netzelement NE1 erfolgen, umgekehrt jedoch noch nicht.

Alternativ zu der unten beschriebenen Möglichkeit, die "Stellvertreteradresse" des zweiten Netzelementes NE2 beim ersten Netzelement NE1 bekannt zu machen, besteht eine weitere Möglichkeit darin, eine beliebige Nutznachricht vom zweiten Netzelement NE2 an das erste Netzelement NE1 zu senden, wodurch die "Stellvertreteradresse" des zweiten Netzelementes NE2 automatisch bekannt gemacht wird, da die Nachricht zwangsläufig durch den zweiten Adreßumsetzer geleitet und somit die Adreßumsetzung festgelegt bzw. ermittelt wird.

Im Schritt 21 sendet das zweite Steuerelement S2 eine hier mit "SetupNAT (Call-Id)" bezeichnete Nachricht an den zweiten Adreßumsetzer AU2, bei dem es sich vorzugsweise um einen NAT Router handelt. Diese Nachricht wird mit D=213.18.125.3, S=172.16.12.22, d.h. der Absenderadresse des zweiten Netzelementes NE2, gekennzeichnet.

Im Schritt 22 erzeugt der zweite Adreßumsetzer AU2 die Adreßumsetzungsbeziehung 172.16.12.22 <-> 213.18.128.35, d.h. die globale Adresse 213.18.128.35 repräsentiert damit das zweite Netzelement NE2. Diese Beziehung wird in einer entsprechenden Tabelle des zweiten Adreßumsetzers AU2 vermerkt, in der auch andere Adreßumsetzungsbeziehungen gespeichert sind. Alternativ dazu steht im Fall statischer Adreßumsetzung die Adreßumsetzungsbeziehung 172.16.12.22 <-> 213.18.128.35 bereits im voraus fest.

Im Schritt 23 leitet der zweite Adreßumsetzer AU2 die Nachricht "SetupNAT (Call-Id)" an D=213.18.125.3 weiter und setzt als Absenderadresse die "Stellvertreteradresse" S=213.18.128.35. Anhand einer in der Nachricht "SetupNAT (Call-Id)" enthaltenen Call-Id bzw. Verbindungskennung wird die empfangene "Stellvertreteradresse" der durch das zweite Netzelement NE2 bestätigten Verbindung zugeordnet.

Über die - nicht dargestellte - Signalisierungsverbindung wird die Verbindungsbestätigung anhand der logischen Adresse des ersten Netzelementes NE1 zum ersten Steuerelement S1 und von dort zum ersten Netzelement NE1 weitergeleitet.

Die in der Verbindungsbestätigung enthaltene "Stellvertreteradresse" 213.18.128.35 des zweiten Netzelementes NE2 für die zu etablierende Nutzdatenverbindung wird beim ersten Netzelement NE1 vermerkt. Da die "Stellvertreteradresse" 213.18.128.35 ebenfalls eine globale Adresse ist, kann nunmehr eine bidirektionale Datenkommunikation zwischen dem ersten Netzelement NE1 und dem zweiten Netzelement NE1 erfolgen. Die einzelnen Zwischenschritte bei den erforderlichen Adreßumsetzungen sind in Figur 2 durch Pfeile in Nachrichtenflußrichtung, die die jeweiligen Adressen enthalten, dargestellt.

Obwohl sich die Erfindung besonders gut für IP Netze und die Verwendung im Zusammenhang mit Echtzeitkommunikation in IP Netzen eignet, ist die Erfindung nicht auf diesen Anwendungsfall beschränkt. Jedes paketorientierte Netz, das mit Adreßumsetzung arbeitet, kann durch die vorliegende Erfindung verbessert werden.

Wie im Zusammenhang mit Figur 1 bereits erwähnt, kann es sich bei den Netzelementen NE1, NE2 um Endgeräte, Media Gateways, Access Konzentratoren, Multimedia Servern oder beliebige andere Netzelemente eines IP Netzes handeln. Im Fall von Endgeräten kann es sich z.B. um ein Voice-over-IP VoIP Endgerät oder um ein Endgerät für IP basierte Videokonferenzen handeln.

Für das Ausführungsbeispiel in Figur 2 wurden die UDP/TCP Portnummern nicht betrachtet, um die Darstellung möglichst einfach zu erhalten. Es versteht sich jedoch, daß diese Portnummern Adreßbestandteile sind, sofern UDP oder TCP eingesetzt werden. Weiterhin ist ersichtlich, daß anstelle eines Adreßumsetzers, der Relationen der Art IP <-> IP' auch einer der in vielen Fällen gebräuchlichen Adreßumsetzer IP:Port <-> IP':Port' eingesetzt werden kann, wobei der Adreßumsetzer für das globale Netz nur wenige oder auch nur eine einzige Adresse IP' aufweist.

Als Protokoll zur Verbindungsteuerung kann z.B. Session Initiation Protocol SIP, Bearer Independent Call Control BICC, ITU-T H.323, ITU-T H.248 oder Media Gateway Control Protocol MGCP eingesetzt werden.

## Patentansprüche

1. Verfahren zur Adreßumsetzung für eine über eine Signalisierungsverbindung (SV) gesteuerte Nutzdatenverbindung (NV)
- zwischen einem ersten Kommunikationsnetz (N1), welches nur innerhalb des ersten Netzes (N1) gültige Adressen aufweist, und einem zweiten Kommunikationsnetz (N2),
- wobei eine Verbindungsanforderung von einem im ersten Netz (N1) angeordneten ersten Netzelement (NE1), dem eine erste Adresse (A1) zugeordnet ist, ausgeht, wobei die Verbindungsanforderung eine Kommunikation mit einem über das zweite Netz (N2) erreichbaren zweiten Netzelement (NE2), dem eine zweite Adresse (A2) zugeordnet ist, zum Ziel hat und die Verbindungsanforderung zunächst zu einem Steuerelement (S) des ersten Netzes (N1) geleitet wird,
**dadurch gekennzeichnet**
- **daß** das Steuerelement (S) an einem Übergang zwischen dem ersten und dem zweiten Netz angeordnet ist und sowohl eine dritte Adresse (A3) des ersten Netzes (N1) als auch eine vierte Adresse (A4) des zweiten Netzes (N2) aufweist,
- **daß** durch das Steuerelement (S) eine mit der ersten Adresse (A1) als Ursprungsadresse und der vierten Adresse (A4) als Zieladresse versehene Nachricht an ein nutzdatenvermittelndes viertes Netzelement (AU) über der erste Netz (N1) gesendet wird, und
- **daß** durch das Steuerelement (S) diese Nachricht nach im vierten Netzelement (AU) erfolgter Adreßumsetzung mit umgesetzter Ursprungsadresse (A1') über das zweite Netz (N2) empfangen und die umgesetzte Ursprungsadresse (A1') ausgewertet wird, um so eine für die über das vierte Netzelement (AU) geleitete Nutzdatenverbindung (NV) des ersten Netzelementes (NE1) geltende Adreßumsetzungsbeziehung, A1 <-> A1', zwischen dem ersten und dem zweiten Netz zu ermitteln.

2. Verfahren nach Anspruch 1,
**dadurch gekennzeichnet,**
**daß** die das erste Netzelement (NE1) im zweiten Kommunikationsnetz (N2) repräsentierende, umgesetzte Ursprungsadresse (A1') gemäß der ermittelten Adreßumsetzungsbeziehung anstelle der ersten Adresse (A1) als Ursprungsadresse für die durch das Steuerelement (S) weiterergeleitete Verbindungsanforderung eingesetzt wird.

3. Verfahren nach einem der Ansprüche 1 oder 2,
**dadurch gekennzeichnet,**
**daß** die Adreßumsetzungsbeziehung im vierten Netzelement (AU) statisch festgelegt ist und administrativ oder automatisch anhand vorgegebener Kriterien eingestellt wird.

4. Verfahren nach einem der Ansprüche 1 oder 2,
**dadurch gekennzeichnet,**
**daß** die Adreßumsetzungsbeziehung im vierten Netzelement (AU) dynamisch ist und durch die durch das Steuerelement (S) gesendete Nachricht initialisiert wird.

5. Verfahren nach einem der Ansprüche 1 bis 4,
**dadurch gekennzeichnet,**
**daß** das erste und das zweite Kommunikationsnetz Paketnetze sind.

6. Verfahren nach einem der Ansprüche 1 bis 5,
**dadurch gekennzeichnet,**
- **daß** das erste und das zweite Netz Paketnetze sind, in denen das Internetprotokoll IP verwendet wird,
- **daß** die genannten Adressen gebildet werden aus IP Adressen und Portnummern des User Datagram Protocol UDP oder des Transmission Control Protocol TCP, und
- **daß** das vierte Netzelement ein Network Address Translation NAT oder Network Port Adress Translation NPAT Router ist.

7. Verfahren nach einem der Ansprüche 1 bis 6,
**dadurch gekennzeichnet,**
**daß** für die Signalisierungsverbindung (SV) eines der folgenden Protokolle verwendet wird: Session Initiation Protocol SIP, Bearer Independent Call Control BICC, ITU-T H.323, ITU-T H.248 oder Media Gateway Control Protocol MGCP.

8. Steuerelement (S) für Kommunikationsnetzwerke (N1, N2) mit Mitteln zum Empfang einer Verbindungsanforderung von einem in einem ersten Netz (N1) angeordneten ersten Netzelement (NE1), das eine erste Adresse (A1) aufweist, wobei die Verbindungsanforderung eine Kommunikation mit einem über ein zweites Netz (N2) erreichbaren zweiten Netzelement (NE2), dem eine zweite Adresse (A2) zugeordnet ist, zum Ziel hat, wobei das erste Netz (N1) nur innerhalb des ersten Netzes (N1) gültige Adressen aufweist,
**dadurch gekennzeichnet,**
**daß** das Steuerelement (S) an einem Übergang zwischen dem ersten und dem zweiten Netz angeordnet ist und folgendes aufweist:
- eine dritte Adresse (A3) des ersten Netzes (N1) und eine vierte Adresse (A4) des zweiten Netzes (N2),
- Mittel zum Senden einer mit der ersten Adresse (A1) als Ursprungsadresse und der vierten Adresse (A4) als Zieladresse versehenen Nachricht an ein nutzdatenvermittelndes viertes Netzelement (AU) über das erste Netz (N1), und
- Mittel zum Empfangen der Nachricht über das zweite Netz (N2) sowie Mittel zum Auswerten einer umgesetzten Ursprungsadresse (A1') der Nachricht zum Ermitteln einer für eine über das vierte Netzelement (AU) geleitete Nutzdatenverbindung (NV) des ersten Netzelementes (NE1) geltenden Adreßumsetzungsbeziehung, A1 <-> A1', zwischen dem ersten und dem zweiten Netz.

9. Steuerelement (S) nach Anspruch 8, welches ferner Mittel zum Weiterleiten der Verbindungsanforderung mit der das erste Netzwerkelement (NE1) im zweiten Kommunikationsnetz (N2) repräsentierenden, umgesetzten Ursprungsadresse (A1') gemäß der ermittelten Adreßumsetzungsbeziehung anstelle der ersten Adresse (A1) als Ursprungsadresse aufweist.

10. Steuerelement (S) nach einem der Ansprüche 8 oder 9,
**dadurch gekennzeichnet,**
**daß** das Steuerelement (S) den Verbindungsaufbau gemäß einem der folgenden Protokolle steuert: Session Initiation Protocol SIP, Bearer Independent Call Control BICC, ITU-T H.323, ITU-T H.248 oder Media Gateway Control Protocol MGCP.

## Claims

1. Method for address translation for a user data link (NV) controlled via a signalling link (SV)
- between a first communication network (N1), which only has addresses valid within the first network (N1), and a second communication network (N2),
- wherein a connection request comes from a first network element (NE1) arranged in the first network (N1) and assigned a first address (A1), the object of the connection request being communication with a second network element (NE2) accessible via the second network (N2) and assigned a second address (A2), and the connection request being initially routed to a control element (S) of the first network (N1),
**characterised in that**
- the control element (S) is arranged at a gateway between the first and the second network and has both a third address (A3) of the first network (N1) and a fourth address (A4) of the second network (N2),
- a message provided with the first address (A1) as source address and the fourth address (A4) as destination address is sent by the control element (S) to a user-data switching fourth network element (AU) via the first network (N1), and
- this message, after address translation performed in the fourth network element (AU), is received with translated source address (A1') via the second network (N2) by the control element (S) and the translated source address (A1') is evaluated by the control element so as thus to determine an address translation association A1 <-> A1' between the first and the second network that applies to the user data link (NV) of the first network element (NE1) routed via the fourth network element (AU).

2. Method according to claim 1,
**characterised in that**
the translated source address (A1') representing the first network element (NE1) in the second communication network (N2) in accordance with the determined address translation association is used as source address for the connection request forwarded by the control element (S).

3. Method according to one of the claims 1 or 2,
**characterised in that**
the address translation association is defined statically in the fourth network element (AU) and set administratively or automatically on the basis of defined criteria.

4. Method according to one of the claims 1 or 2,
**characterised in that**
the address translation association in the fourth network element (AU) is dynamic and initialised by the message sent by the control element (S).

5. Method according to one of the claims 1 to 4,
**characterised in that**
the first and the second communication network are packet networks.

6. Method according to one of the claims 1 to 5,
**characterised in that**
- the first and the second network are packet networks in which the Internet Protocol IP is used,
- the said addresses are formed from IP addresses and port numbers of the User Datagram Protocol UDP or the Transmission Control Protocol TCP, and
- the fourth network element is a Network Address Translation NAT or Network Port Address Translation NPAT router.

7. Method according to one of the claims 1 to 6,
**characterised in that**
one of the following protocols is used for the signalling link (SV): Session Initiation Protocol SIP, Bearer Independent Call Control BICC, ITU-T H.323, ITU-T H.248 or Media Gateway Control Protocol MGCP.

8. Control element (S) for communication networks (N1, N2) having means for receiving a connection request from a first network element (NE1) having a first address (A1) and arranged in a first network (N1), the object of the connection request being communication with a second network element (NE2) accessible via a second network (N2) and assigned a second address (A2), the first network (N1) only having addresses valid within the first network (N1),
**characterised in that**
the control element (S) is arranged at a gateway between the first and the second network, and by having the following:
- a third address (A3) of the first network (N1) and a fourth address (A4) of the second network (N2),
- means for sending a message provided with the first address (A1) as source address and the fourth address (A4) as destination address to a user-data switching fourth network element (AU) via the first network (N1), and
- means for receiving the message via the second network (N2) and means for evaluating a translated source address (A1') of the message in order to determine an address translation association A1 <-> A1' between the first and the second network that applies to a user data link NV of the first network element NE1 routed via the fourth network element (AU) .

9. Control element (s) according to claim 8 which also has means for forwarding the connection request using as source address the translated source address (A1') representing the first network element (NE1) in the second communication network (N2) in accordance with the determined address translation association, instead of the first address (A1).

10. Control element (s) according to one of the claims 8 or 9,
**characterised in that**
the control element (S) controls the connection setup according to one of the following protocols: Session Initiation Protocol SIP, Bearer Independent Call Control BICC, ITU-T H.323, ITU-T H.248 or Media Gateway Control Protocol MGCP.

## Revendications

1. Procédé de conversion d'adresse pour une connexion de données utiles (NV) commandée via une connexion de signalisation (SV)
- entre un premier réseau de communication (N1), lequel présente des adresses valides uniquement dans le premier réseau (N1), et un deuxième réseau de communication (N2),
- une demande de connexion émanant d'un premier élément de réseau (NE1) disposé dans le premier réseau (N1) et auquel est attribuée une première adresse (A1), la demande de connexion visant une communication avec un deuxième élément de réseau (NE2) joignable via le deuxième réseau (N2) et auquel est attribuée une deuxième adresse (A2) et la demande de connexion étant d'abord acheminée vers un élément de commande (S) du premier réseau (N1),
**caractérisé en ce que**
- l'élément de commande (S) est disposé sur une passerelle entre le premier et le deuxième réseau et présente à la fois une troisième adresse (A3) du premier réseau (N1) et une quatrième adresse (A4) du deuxième réseau (N2),
- **en ce que** l'élément de commande (S) envoie, via le premier réseau (N1), un message doté de la première adresse (A1) comme adresse d'origine et de la quatrième adresse (A4) comme adresse de destination à un quatrième élément de réseau (AU) transmettant des données utiles et
- **en ce que** l'élément de commande (S), une fois la conversion d'adresse effectuée dans le quatrième élément de réseau (AU), reçoit ce message avec l'adresse d'origine convertie (A1') via le deuxième réseau (N2) et évalue l'adresse d'origine convertie (A1') de manière à déterminer ainsi une relation de conversion d'adresse, A1 <-> A1', valide pour la connexion de données utiles (NV) du premier élément de réseau (NE1) acheminée via le quatrième élément de réseau (AU), entre le premier et le deuxième réseau.

2. Procédé selon la revendication 1,
**caractérisé en ce que**
l'adresse d'origine convertie (A1') représentant le premier élément de réseau (NE1) dans le deuxième réseau de communication (N2) est utilisée, selon la relation de conversion d'adresse déterminée, à la place de la première adresse (A1) comme adresse d'origine pour la demande de connexion réacheminée par l'élément de commande (S).

3. Procédé selon l'une des revendications 1 ou 2,
**caractérisé en ce que**
la relation de conversion d'adresse est définie statiquement dans le quatrième élément de réseau (AU) et est ajustée administrativement ou automatiquement à l'aide de critères prédéfinis.

4. Procédé selon l'une des revendications 1 ou 2,
**caractérisé en ce que**
la relation de conversion d'adresse dans le quatrième élément de réseau (AU) est dynamique et est initialisée par le message envoyé par l'élément de commande (S).

5. Procédé selon l'une des revendications 1 à 4,
**caractérisé en ce que**
le premier et le deuxième réseau de communication sont des réseaux de commutation par paquets.

6. Procédé selon l'une des revendications 1 à 5,
**caractérisé en ce que**
- le premier et le deuxième réseau de communication sont des réseaux de commutation par paquets, dans lesquels on utilise le protocole Internet IP,
- **en ce que** les adresses citées sont formées à partir d'adresses IP et de numéros de port du User Datagram Protocol UDP ou du Transmission Control Protocol TCP et
- **en ce que** le quatrième élément de réseau est un Network Address Translation NAT ou Network Port Address Translation NPAT Router.

7. Procédé selon l'une des revendications 1 à 6,
**caractérisé en ce que**
on utilise pour la connexion de signalisation (SV) l'un des protocoles suivants : Session Initiation Protocol SIP, Bearer Independant Call Control BICC, ITU-T H.323, ITU-T H.248 ou Media Gateway Control Protocol MGCP.

8. Elément de commande (S) pour réseaux de communication (N1, N2), doté de moyens pour recevoir une demande de connexion d'un premier élément de réseau (NE1) disposé dans un premier réseau (N1) et présentant une première adresse (A1), la demande de connexion visant une communication avec un deuxième élément de réseau (NE2) joignable via le deuxième réseau (N2) et auquel est attribuée une deuxième adresse (A2), le premier réseau (N1) présentant des adresses valides uniquement dans le premier réseau (N1),
**caractérisé en ce que**
l'élément de commande (S) est disposé sur une passerelle entre le premier et le deuxième réseau et présente ce qui suit :
- une troisième adresse (A3) du premier réseau (N1) et une quatrième adresse (A4) du deuxième réseau (N2),
- des moyens pour envoyer un message doté de la première adresse (A1) comme adresse d'origine et de la quatrième adresse (A4) comme adresse de destination à un quatrième élément de réseau (AU) transmettant des données utiles, via le premier réseau (N1), et
- des moyens pour recevoir le message via le deuxième réseau (N2) ainsi que des moyens pour évaluer une adresse d'origine convertie (A1') du message de manière à déterminer une relation de conversion d'adresse, A1 <-> A1', valide pour une connexion de données utiles (NV) du premier élément de réseau (NE1) acheminée via le quatrième élément de réseau (AU), entre le premier et le deuxième réseau.

9. Elément de commande (S) selon la revendication 8, lequel présente en outre des moyens pour réacheminer la demande de connexion avec l'adresse d'origine convertie (A1') représentant le premier élément de réseau (NE1) dans le deuxième réseau de communication (N2), selon la relation de conversion d'adresse déterminée, à la place de la première adresse (A1) comme adresse d'origine.

10. Elément de commande (S) selon l'une des revendications 8 ou 9,
**caractérisé en ce que**
l'élément de commande (S) commande l'établissement de la connexion selon l'un des protocoles suivants : Session Initiation Protocol SIP, Bearer Independant Call Control BICC, ITU-T H.323, ITU-T H.248 ou Media Gateway Control Protocol MGCP.
